# EUROPÄISCHE PATENTSCHRIFT

(11) **EP 3 152 872 B1**
(45) Veröffentlichungstag und Bekanntmachung des Hinweises auf die Patenterteilung: **09.05.2018**
(21) Anmeldenummer: 15730074.0
(22) Anmeldetag: 26.05.2015
(51) Int. Cl.: H04L 12/40

(54) **ÜBERTRAGUNGSEINHEIT MIT PRÜFFUNKTION**
TRANSMISSION UNIT WITH CHECKING FUNCTION
UNITÉ DE TRANSMISSION AVEC FONCTION DE VÉRIFICATION

(30) Priorität: 03.06.2014 DE 102014210505
(43) Veröffentlichungstag der Anmeldung: 12.04.2017
(73) Patentinhaber: Robert Bosch GmbH, 70442 Stuttgart (DE)
(72) Erfinder: THIELE, Stefan, 72762 Reutlingen (DE)
(86) Internationale Anmeldenummer: PCT/EP2015/061512
(87) Internationale Veröffentlichungsnummer: WO 2015/185386

(56) Entgegenhaltungen:
- EP-A1- 2 637 361
- DE-A1-102010 029 349
- DE-A1-102012 210 722
- US-A1- 2008 228 934

## Beschreibung

### Stand der Technik

Ein bekanntes Bussystem ist das Controller Area Network (CAN). Es wird beispielsweise in der BOSCH CAN-Spezifikation 2.0, die von der Robert Bosch GmbH Website http://www.semiconductors.bosch.de heruntergeladen werden kann, beschrieben. Das CAN-Protokoll ist beispielsweise in der Automobilindustrie, in der Industrieautomatisierung, oder auch in der Gebäudevernetzung weit verbreitet.

Das Bussystem ist hierbei üblicherweise ein Leitungspaar, wie etwa ein verdrilltes Kupferkabel. An das Bussystem angeschlossene Kommunikationsteilnehmer, auch CAN-Knoten genannt, können über das Bussystem Nachrichten austauschen, die beispielsweise zu übermittelnde Daten enthalten. Die Nachrichten sind gemäß den durch das CAN-Protokoll vorgegebenen Regeln aufgebaut.

Die im CAN-Protokoll zu übertragenden Nachrichten weisen einen Kopfteil, ein Datenfeld und einen Schlussteil auf, wobei die zu übertragenen Daten im Datenfeld enthalten sind. Der Kopfteil der Nachricht enthält ein Start-Of-Frame-Bit, ein Arbitration Field, sowie ein Control Field. Das Arbitration Field umfasst den Identifier, der die Priorität der Nachricht bestimmt. CAN unterstützt Identifier Längen von 11-Bit ("Standard Format" oder "Base Format") und 29-Bit ("Extended Format"). Das Control Field umfasst einen Data Length Code, der die Länge des Datenfeldes vorgibt. Der Schlussteil der Nachricht weist ein CRC Field, ein Acknowledge Field und ein End-Of-Frame Field auf. Dieses CAN-Protokoll wird im Folgenden als "Classic CAN" bezeichnet. Es werden über Classic CAN Bitraten bis zu 1 Mbit / s erreicht.

Die einzelnen Bits werden üblicherweise als Spannungsdifferenzen zwischen den Leitungen des Bussystems dargestellt, wobei eine erste Spannungsdifferenz einer logischen "0" entspricht und eine zweite Spannungsdifferenz einer logischen "1" entspricht. Bei CAN wird die erste Spannungsdifferenz, die einer "0" entspricht, auch als "dominanter Pegel" bezeichnet, und die zweite Spannungsdifferenz, die einer logischen "1" entspricht, als "rezessiver Pegel".

Die Rollen von Sender und Empfänger für die zu übertragenden Nachrichten werden unter den Teilnehmern durch ein Arbitrierungsverfahren anhand von Informationen aus dem Kopfteil der Nachrichten vergeben. Arbitrierungsverfahren bedeutet in diesem Zusammenhang, dass anhand einer in der Nachricht enthaltenen Kennung ausgehandelt wird, welcher Teilnehmer Sendezugriff auf den Bus erhält, wenn mehrere Teilnehmer gleichzeitig versuchen, eine Nachricht zu senden, wobei bei eindeutig vergebenen Kennungen genau einem Teilnehmer der Sendezugriff durch das Arbitrierungsverfahren zuerkannt wird.

Die Einführung von immer stärker vernetzten Anwendungen, beispielsweise von Assistenzsystemen in Fahrzeugen, oder von vernetzten Steuersystemen in Industrieanlagen, führt zu der allgemeinen Anforderung, dass die Bandbreite für die serielle Kommunikation erhöht werden muss.

Es ist ein weiteres Protokoll bekannt, das "CAN with Flexible Data-Rate" oder CAN FD genannt wird. Dieses benutzt das vom CAN bekannte Busarbitrierungsverfahren, erhöht aber die Bitrate durch Umschalten auf eine kürzere Bitdauer nach dem Ende der Arbitrierung bis zum Bit CRC Delimiter. Die effektive Datenrate wird außerdem durch Zulassen längerer Datenfelder erhöht.

CAN FD kann zur allgemeinen Kommunikation, aber auch in bestimmten Betriebsarten, beispielsweise für Software-Download oder End-of-Line-Programmierung oder für Wartungsarbeiten genutzt werden.

Bei CAN FD sind üblicherweise zwei Sätze von Bittakt-Konfigurationsregistern vorgesehen, welche eine Bitdauer für die Arbitrierungsphase und eine weitere Bitdauer für die Datenphase definieren. Die Bitdauer zur Arbitrierungsphase hat die gleichen Einschränkungen wie in Classic CAN-Netzwerken, die Bitdauer für die Datenphase kann im Hinblick auf die Leistungsfähigkeit der gewählten Transceiver und die Anforderungen des CAN FD Netzwerks kürzer gewählt werden.

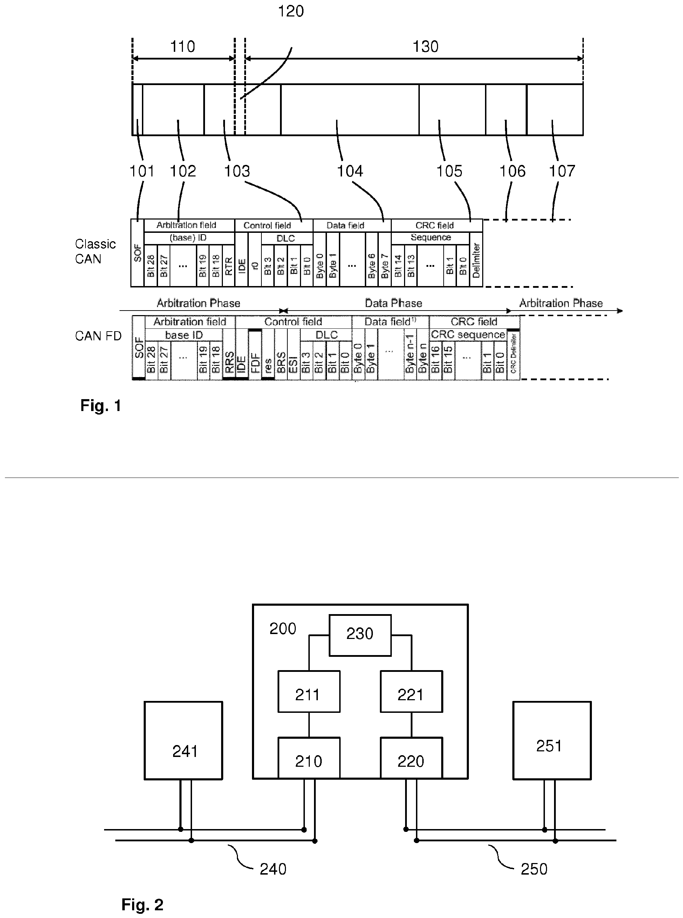

Eine CAN FD Nachricht besteht aus den gleichen Elementen wie eine Classic CAN-Nachricht, die sich jedoch im Detail unterscheiden. So können in einer CAN FD-Nachricht das Datenfeld und das CRC-Feld länger sein. Beispiele für Classic CAN- und CAN FD-Nachrichten sind in Figur 1 dargestellt.

CAN FD unterstützt beide Identifier Längen des CAN-Protokolls, das 11-Bit lange "Standard Format", das auch "Base Format" genannt wird, und das 29-Bit lange "Extended Format". CAN-FD Nachrichten haben die gleiche Struktur wie Classic CAN-Nachrichten. Die Unterscheidung zwischen Classic CAN-Nachrichten und CAN-FD Nachrichten erfolgt durch ein Steuersignal, nämlich ein reserviertes Steuerbit, welches im Classic CAN stets dominant übertragen wird, den Namen "r0" oder "r1" trägt und sich im Control Field vor dem Data Length Code befindet. In einer CAN FD Nachricht wird dieses Steuerbit rezessiv übertragen und heißt FDF ("FD Format").

Viele andere Kommunikationssysteme kennen ähnliche Steuersignale oder Steuerbits, durch die beispielsweise zwischen unterschiedlichen Formaten unterschieden werden kann. Im Folgenden wird die Erfindungsidee ausgehend von CAN dargestellt. Die Erfindung ist dadurch jedoch nicht auf CAN Bussysteme beschränkt, sondern kann ausgehend von allen Bussystemen ausgeführt werden, die die Merkmale des Oberbegriffes des beanspruchten Verfahrens erfüllen.

Es folgen in den CAN FD-Nachrichten im Vergleich zu Classic CAN-Nachrichten zusätzliche Control Field Bits, z. B. das Bit BRS, welches die Position angibt, an der, sofern das BRS Bit einen entsprechenden Wert aufweist, die Bitdauer in einer CAN FD-Nachricht auf einen kürzeren Wert umgeschaltet wird. Dies ist in Figur 1a durch Pfeile dargestellt, die die Nachrichten aufteilen in einen Abschnitt mit der Bezeichnung "CAN FD Daten-Phase", in denen die hohe Bitrate bzw. die kurze Bitdauer verwendet wird, und in zwei Abschnitte mit dem Namen "CAN FD Arbitration-Phase", wo die niedrigere Bitrate bzw. die längere Bitdauer verwendet wird.

Arbitration-Phase", wo die niedrigere Bitrate bzw. die längere Bitdauer verwendet wird.

Die Anzahl der Bytes im Datenfeld wird durch den Data Length Code angezeigt. Dieser Code ist 4 Bit breit und wird im Control-Feld übertragen. Die Kodierung ist bei CAN FD anders als im Classic CAN. Die ersten neun Codes (0x0000 bis 0x1000) sind die gleichen, aber die folgenden Codes (0x1001 bis 0x1111) korrespondieren zu größeren Datenfeldern der CAN FD-Nachrichten, beispielsweise 12, 16, 20, 24, 32, 48 und 64 Bit.

Transceiver sind Busanschlusseinheiten, welche im Sendefall die logischen Signale, die beispielsweise von einem Kommunikationscontroller oder Mikrocontroller empfangen werden, in die physikalisch vorgesehenen Signale wie z.B. Spannungsdifferenzen zwischen den Signalleitungen umwandeln. Im Empfangsfall werden die physikalischen Signale, die auf dem Bussystem vorliegen, empfangen und in logische Signale umgewandelt.

Classic CAN-Transceiver können für CAN FD verwendet werden, spezielle modifizierte Transceiver können gegebenenfalls zu einer weiteren Steigerung der Bitrate in der Datenphase beitragen oder zusätzliche Funktionalitäten übernehmen.

Das CAN FD-Protokoll ist in einer Protokoll-Spezifikation mit dem Titel "CAN with Flexible Data-Rate Specification", im folgenden bezeichnet als die CAN FD Spezifikation, beschrieben, die auf der Robert Bosch GmbH Website http://www.semiconductors.bosch.de heruntergeladen werden kann.

Die Offenlegungsschrift DE 10 2012 210722 A1 offenbart ein Verfahren zur Steuerung des Zugangs zu einem Bussystem, bei dem Bitsquenzen von Datenpaketen von einer Überprüfungseinheit geprüft werden und in Abhängigkeit der erzielten Prüfergebnisse die Datenpakete an unterschiedliche Kontrolleinheiten weitergeleitet werden.

### Offenbarung der Erfindung

In den genannten bekannten Netzwerken müssen alle Teilnehmer am Netzwerk einen CAN-FD-Kommunikationcontroller aufweisen, damit CAN FD-Kommunikation durchgeführt werden kann. Die CAN FD- Kommunikationcontroller sind jedoch in der Lage, sich an Classic CAN-Kommunikation zu beteiligen. Befindet sich ein Classic CAN-Teilnehmer im Netzwerk, fällt daher die Kommunikation auf das Classic CAN-Nachrichtenformat zurück.

Eine Ursache für dieses Zurückfallen auf die langsamere Kommunikation in gemischten Netzwerken ist die Überwachung der Kommunikation durch die Kommunikations-Teilnehmer, die für die hohe Übertragungssicherheit beispielsweise in CAN-Bussystemen mitverantwortlich ist. Da die unmodifizierten Classic CAN-Kommunikationcontroller die schnelleren Datenbits der CAN FD-Nachrichten nicht korrekt empfangen können, würden sie diese Nachrichten durch Fehlernachrichten (so genannte Error-Frames) zerstören.

### Vorteile der Erfindung

Sollen Bussysteme zu CAN FD aufgewertet werden, so kann es aber vorteilhaft sein, dies inkrementell durchzuführen, also nicht für alle Busteilnehmer gleichzeitig. Änderungsrisiko und Kosten können so auf ein akzeptables Maß begrenzt werden. Das heißt beispielsweise: Nur die Busteilnehmer werden ausgetauscht, die schnell kommunizieren sollen, Busteilnehmer mit geringen Datenvolumen bleiben zunächst unverändert.

Es ist vor diesem Hintergrund vorteilhaft, einen gemischten Betrieb aus CAN FD- und herkömmlichen CAN-Busteilnehmern zu ermöglichen. Die CAN FD-Botschaften sind hierzu von den inkompatiblen herkömmlichen CAN-Controllern fernzuhalten. Hierbei sollen sowohl einzelne Teilnehmer von CAN FD-Nachrichten abgeschirmt werden können, als auch ganze Teilbussysteme durch eine geeignete Zweiteilung des physikalischen Busses.

Ein Teilbussystem ist hierbei ein Bussystem, das unabhängig funktionsfähig ist, das aber - beispielsweise durch eine geeignete Vorrichtung - mit einem oder mehreren weiteren Teilbussystemen zu einem größeren Bussystem zusammengeführt werden kann.

Unsere Erfindung umfasst vorteilhafterweise eine Übertragungseinheit zum Anschluss an ein erstes Bussystem, wobei die Übertragungseinheit über das erste Bussystem Nachrichten empfängt, wobei die Nachrichten als Abfolge einer ersten Bitsequenz, wenigstens eines Steuersignals und einer zweiten Bitsequenz aufgebaut sind, wobei durch die Übertragungseinheit die erste Bitsequenz einer empfangenen Nachricht an eine Verarbeitungsstation weitergeleitet wird, wobei durch die Übertragungseinheit wenigstens ein vorgegebenes Steuersignal überprüft wird, wobei durch die Übertragungseinheit die zweite Bitsequenz der empfangenen Nachricht an die Verarbeitungsstation weitergeleitet wird, wenn das vorgegebene Steuersignal der empfangenen Nachricht einen vorgegebenen Wert aufweist. Die Übertragungseinheit ist dadurch gekennzeichnet, dass sie an Stelle der zweiten Bitsequenz eine vorgegebene oder vorgebbare Abschluss-Bitsequenz an die Verarbeitungsstation sendet, wenn das vorgegebene Steuersignal der empfangenen Nachricht einen von dem vorgegebenen Wert abweichenden Wert aufweist.
Eine solche Übertragungseinheit ermöglicht beispielsweise einen gemischten Betrieb aus CAN FD- und herkömmlichen CAN-Busteilnehmern. Die CAN FD-Botschaften werden durch die Übertragungseinheit von den inkompatiblen herkömmlichen CAN-Controllern ferngehalten. Hierbei können sowohl einzelne Teilnehmer von CAN FD-Nachrichten abgeschirmt werden, aber auch ganze Teilbussysteme durch eine geeignete Zweiteilung des physikalischen Busses mit Hilfe der Erfindung.

Als Verarbeitungsstation kommt hierbei sowohl ein Teilnehmer eines an die Überbrückungseinheit angeschlossenen Bussystems oder Teilbussystems in Frage, als auch ein mit der Überbrückungseinheit verbundenes Bauelement wie zum Beispiel ein Kommunikationscontroller oder ein Mikrocontroller. Dies wird in den Ausführungsbeispielen weiter ausgeführt.

Es ist weiter vorteilhaft, wenn die Übertragungseinheit über das erste Bussystem Nachrichten in einem ersten Format und wenigstens einem weiteren Format empfängt, wobei der vorgegebene Wert des vorgegebenen Steuersignals die Nachrichten in dem ersten Format kennzeichnet, wobei die vorgegebene oder vorgebbare Abschluss-Bitsequenz so aufgebaut ist, dass die Verarbeitungsstation eine Nachricht im ersten Format empfängt. Dadurch können handelsübliche Verarbeitungsstationen, die für den Empfang von Nachrichten im ersten Format eingerichtet sind, weiterverwendet werden. Die Verarbeitungsstationen werden auf diese Weise zuverlässig von den Nachrichten in dem weiteren Format abgeschirmt.

Es ist weiter vorteilhaft, wenn durch die Übertragungseinheit die erste Bitsequenz der empfangenen Nachricht an die Verarbeitungsstation weitergeleitet wird, indem eine physikalische Kopplung der Leitungen des ersten Bussystems mit den Leitungen eines zweiten Bussystems hergestellt wird, wobei die Verarbeitungsstation ein Teilnehmer des zweiten Bussystems ist. Dadurch kann beispielsweise eine Priorisierung der Zugriffes auf das Bussystem unter den Teilnehmern des ersten und des zweiten (Teil-)bussystems übergeifend erfolgen, beispielsweise im Rahmen eines Arbitirierungsverfahrens, wie es bei Classic CAN oder CAN FD verwendet wird. Außerdem ist eine solche Lösung mit geringem Hardware-Aufwand darstellbar und erzeugt im Ergebnis eine Kopplung der beiden Teilbussysteme im Wesentlichen ohne zusätzliche Latenzzeit bei der Nachrichtenübertragung.

Es ist weiter vorteilhaft, wenn die physikalische Kopplung getrennt wird, wenn das vorgegebene Steuersignal der empfangenen Nachricht einen von dem vorgegebenen Wert abweichenden Wert aufweist. Dadurch wird vermieden, dass die Teilnehmer des zweiten (Teil-)bussystems Nachrichten im ersten Format empfangen und beispielsweise Fehlersignale versenden, da für den Empfang von Nachrichten dieses Formats nicht eingerichtet sind.

Es ist in einer anderen Ausführungsform vorteilhaft, wenn durch die Übertragungseinheit die erste Bitsequenz der empfangenen Nachricht an die Verarbeitungsstation weitergeleitet wird, indem bitweise die über das erste Bussystem empfangenen Signale auf die Leitungen eines zweiten Bussystems übertragen werden, wobei die Verarbeitungsstation ein Teilnehmer des zweiten Bussystems ist. Auch so kann eine Priorisierung der Zugriffes auf das Bussystem unter den Teilnehmern des ersten und des zweiten (Teil-)bussystems übergeifend erfolgen.

Es ist in diesem Fall vorteilhaft, wenn die Übertragungseinheit an Stelle der zweiten Bitsequenz die vorgegebene oder vorgebbare Abschluss-Bitsequenz über das zweite Bussystem sendet, wenn das vorgegebene Steuersignal der empfangenen Nachricht einen von dem vorgegebenen Wert abweichenden Wert aufweist. So werden die Teilnehmer des zweiten Bussystems zuverlässig von den Nachrichten abgeschirmt, die den abweichenden Wert des Steuersignals aufweisen.

Es ist in einer anderen Ausführungsform vorteilhaft, wenn durch die Übertragungseinheit die erste Bitsequenz der empfangenen Nachricht an die Verarbeitungsstation weitergeleitet wird, indem bitweise die über das erste Bussystem empfangenen Signale über interne Leitungen an einen Kommunikationscontroller oder Mikrocontroller als Verarbeitungsstation übertragen werden, wobei der Kommunikationscontroller oder Mikrocontroller für die Verarbeitung von Nachrichten im ersten Format eingerichtet ist.

Eine solche Übertragungseinheit ermöglicht beispielsweise einen Betrieb von Teilnehmern mit herkömmlichen Classic CAN-Kommunikationscontrollern an einem Bussystem, auf dem auch CAN FD-Nachrichten ausgetauscht werden. Die CAN FD-Nachrichten werden durch die Übertragungseinheit von den inkompatiblen herkömmlichen Classic CAN-Controllern ferngehalten.

Besonders vorteilhaft ist die Erfindung in Bussystemen anwendbar, bei denen das erste Format das Classic CAN-Nachrichtenformat ist, bei denen das weitere Format das CAN FD-Nachrichtenformat ist. Weit verbreitete HalbleiterBauelemente mit Classic CAN können so in CAN FD-Bussystemen weiterverwendet werden.

Es ist vorteilhaft, dass die Übertragungseinheit den vorgegebenen Wert für das vorgegebene Steuersignal an die Verarbeitungsstation sendet, wenn das vorgegebene Steuersignal der empfangenen Nachricht einen von dem vorgegebenen Wert abweichenden Wert aufweist. So wird sichergestellt, dass die Verarbeitungsstation eine intakte Nachricht gemäß dem ersten Format erhält.

Die Unteransprüche definieren weitere vorteilhafte Ausprägungen der Erfindung, insbesondere eine Vorrichtung, die als Busteilnehmer oder Busverbindung oder Brückenelement verwendet werden kann, sowie ein erfindungsgemäßes Verfahren, welches die Vorteile der Übertragungseinheit ebenfalls aufweist.

### Figuren:

Figur 1 stellt Nachrichten mit einer gemeinsamen Grundstruktur und spezifischen Format-Unterschieden, sowie die Kennzeichnung durch ein Steuersignal dar.
Figur 2 zeigt schematisch ein Bussystem mit einer bekannten Bridge, an welche zwei Teilbussysteme angeschlossen sind.
Figur 3 zeigt schematisch ein Bussystem mit einer erfindungsgemäßen Vorrichtung mit einer Übertragungseinheit, an welche zwei Teilbussysteme angeschlossen sind.
Figur 4 zeigt ein schematisches Blockschaltbild einer ersten Ausführungsform der erfindungsgemäßen Übertragungseinheit.
Figur 5 zeigt schematisch ein Bussystem mit einer erfindungsgemäßen Vorrichtung mit einer Übertragungseinheit, durch welche die Vorrichtung mit dem Bussystem verbunden ist.
Figur 6 zeigt ein schematisches Blockschaltbild einer zweiten Ausführungsform der erfindungsgemäßen Übertragungseinheit.

Die Figur 1 stellt am Beispiel von Classic CAN- (oberer Teil der Figur) und CAN-FD-Nachrichten (unterer Teil der Figur) die Grundstruktur der übertragenen Nachrichten mit spezifischen Format-Unterschieden, sowie die Kennzeichnung durch ein Steuersignal dar. Es ist bei den Classic CAN- und CAN FD-Nachrichten nur der Fall mit 11-Bit Adressierung dargestellt. Die Erfindung ist gleichermaßen für 29-Bit Adressierung anwendbar.

Die Nachrichten 100 sind allgemein gesprochen als Abfolge einer ersten Bitsequenz 110, wenigstens eines Steuersignals 120 und einer zweiten Bitsequenz 130 aufgebaut. Die Bezeichnungen der Nachrichtenabschnitte lauten: Start-Of-Frame-Bit 101, Arbitration Field 102, Control Field 103, Data Field 104, CRC Field 105, gefolgt von Acknowledge Field 106 und End-of-Frame Field 107. Die detaillierte Abfolge der Bits ist für das gewählte Beispiel von 11-Bit Classic CAN beziehungsweise CAN FD der Figur zu entnehmen. Das wenigstens eine Steuersignal 120 ist im gewählten Beispiel ein einziges Steuerbit im Control Field 103 an der Position, die in CAN FD Nachrichten mit FDF bezeichnet ist. Steuersignale können im Zusammenhang mit der vorliegenden Erfindung auch mehrere Bits einer Nachricht umfassen.

Es werden für die Nachrichtenabschnitte der CAN-Nachrichten in der Regel die englischen Bezeichnungen verwendet, wie sie im Standard ISO 11898 festgelegt sind.

Vor dem Start-of-Frame-Bit 101 und nach dem End-of-Frame-Field 107 der Nachricht befindet sich der Bus im Zustand ohne Datenübertragung. Die optionale Bitratenumschaltung, die bei CAN FD-Nachrichten erfolgen kann, findet in dem mit "Data Phase" bezeichneten Bereich der CAN FD-Nachricht statt, beginnt also mit dem BRS-Bit ("Bit Rate Switch") und endet mit dem CRC Delimiter.

Die vorliegende Erfindung wird am Beispiel von Classic CAN und CAN FD erläutert, ist aber auch auf beliebige andere Bussysteme übertragbar, in denen unterschiedliche Nachrichtenformate durch ein oder mehrere Steuersignale oder Steuerbits an festgelegten Bitpositionen innerhalb der Nachricht gekennzeichnet werden.

Die vorliegende Erfindung wird in den folgenden Ausführungsbeispielen für den Fall näher beschrieben, dass als Steuersignal ein einziges Steuerbit vorliegt. Für den Fachmann ist jedoch klar, dass die Erfindung auch für Nachrichtenformate mit Steuersignalen aus mehreren Steuerbits anwendbar ist.

Bei der in Figur 2 dargestellten, bekannten Lösung mit Bridge findet eine Botschaftenfilterung durch eine Filtereinheit statt. Die Bridge 200 weist zwei Transceiver oder Busanschlusseinheiten 210 und 220 auf. An den ersten Transceiver 210 ist ein erstes Teilbussystem 240 mit wenigstens einem Teilnehmer 241 angeschlossen. An den zweiten Transceiver 220 ist ein zweites Teilbussystem 250 mit wenigstens einem Teilnehmer 251 angeschlossen. Die Bridge 200 weist einen ersten Kommunikationscontroller 211 auf, der den ersten Transceiver 210 mit einer Filtereinheit 230 verbindet. Die Bridge 200 weist weiter einen zweiten Kommunikationscontroller 221 auf, der den zweiten Transceiver 220 mit der Filtereinheit 230 verbindet.

In der Bridge wird eine Nachricht von einem sendenden Teilnehmer, z.B. Teilnehmer 241, über das erste Teilbussystem 240 und den ersten Transceiver 210 im dem diesem Teilbussystem zugeordneten Kommunikationscontroller 211 komplett empfangen und in einem geeigneten Nachrichtenspeicher oder -puffer abgespeichert. Die Filtereinheit 230 innerhalb der Bridge 200 wertet die empfangene und abgespeicherte Nachricht aus und entscheidet, ob die Nachricht von dem zweiten Kommunikationscontroller 221, welcher dem zweiten Teilbussystem 250 zugeordnet ist, aus dem Nachrichtensppeicher ausgelesen und über den zweiten Transceiver 220 auf das zweite Teilbussystem 250 ausgesendet wird. Analog erfolgt eine gefilterte Nachrichtenübertragung vom zweiten Teilbussystem 250 zum ersten Teilbussystem 240 in umgekehrter Richtung. Die beiden Teilbussysteme sind physikalisch voneinander getrennt.

Die Bridge kann beispielsweise die vom ersten Teilbussystem 240 empfangene Nachricht an das zweite Teilbussystem 250 weiterleiten, wenn ein Steuersignal an einer festgelegten Position der Nachricht (z.B. das FDF Bit einer CAN FD-Nachricht) einen vorgegebenen Wert aufweist.

Nachteile dieser bekannten Lösung sind, dass zwei Kommunikationscontroller und Nachrichtenspeicher vorgehalten werden müssen. Zwischen den beiden Teilbussystemen treten außerdem relativ hohe Latenzzeiten auf, denn die Nachricht muss komplett empfangen und abgespeichert werden, bevor die Filtereinheit entscheidet, ob sie auf dem anderen Teilbussystem versendet wird. Weiterhin kann es nachteilig sein, dass der Arbitirierungsmechanismus für die CAN- oder CAN FD- Nachrichten, der die Priorisierung des Buszugriffes bei gleichzeitigen Sendeversuchen mehrerer Teilnehmer bestimmt, separat in den getrennten Teilbussystemen stattfindet.

Demgegenüber wird durch eine Vorrichtung mit einer Übertragungseinheit gemäß unserer Erfindung eine physikalische Auftrennung des Bussystems in ein erstes Teilbussystem und ein zweites Teilbussystem vermieden oder zeitlich begrenzt durchgeführt, wie in den folgenden Ausführungsbeispielen dargestellt wird:

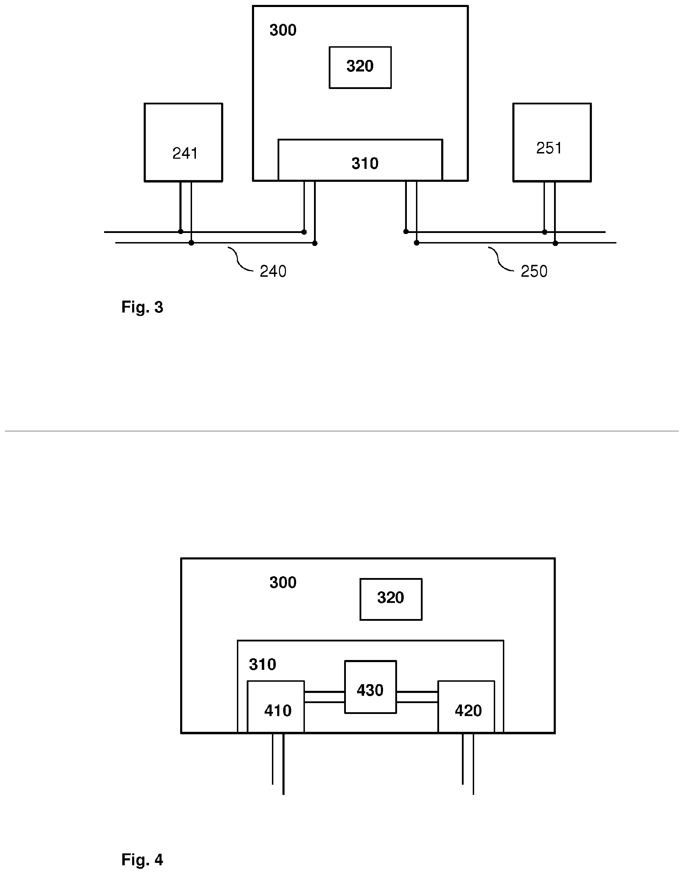

### Ausführungsbeispiel 1 (Figuren 3 und 4):

Figur 3 zeigt schematisch ein Bussystem mit einer erfindungsgemäßen Vorrichtung, an welche zwei Teilbussysteme angeschlossen sind. Figur 4 zeigt ein schematisches Blockschaltbild einer ersten Ausführungsform der vorliegenden Erfindung.

Die erfinderische Vorrichtung 300 umfasst eine erfindungsgemäße Übertragungseinheit 310, sowie optional weitere Komponenten 320. Die dargestellte Komponente 320 steht dabei stellvertretend für verschiedene optionale Komponenten z.B. zur Steuerung, Energieversorgung etc., welche in der Vorrichtung 300 vorgesehen werden können. Ein erstes Teilbussystem 240 mit wenigstens einem Teilnehmer 241 und ein zweites Teilbussystem 250 mit wenigstens einem Teilnehmer 251 sind über die erfindungsgemäße Übertragungseinheit 310 an die Vorrichtung 300 angeschlossen. Jedes Teilbussystem weist beispielsweise zwei Leitungen auf, etwa zwei Kupferleitungen, welche gegeneinander isoliert sind.

Die Übertragungseinheit 310 kann, wie in Figur 4 dargestellt, zwei Transceiver oder Busanschlusseinheiten 410 und 420 aufweisen. An den ersten Transceiver 410 ist das erste Teilbussystem 240 mit wenigstens einem Teilnehmer 241 angeschlossen. An den zweiten Transceiver 420 ist das zweite Teilbussystem 250 mit wenigstens einem Teilnehmer 251 angeschlossen. Alternativ können beide Transceiver auch in einer einzigen Komponente integriert ausgeführt werden.

Die Übertragungseinheit 310 weist weiterhin eine Protokollprüfungseinheit 430 auf, welche dazu eingerichtet ist, bei wenigstens einem der angeschlossenen Teilbussysteme in den empfangenen Nachrichten den Wert eines festgelegten Steuersignals zu prüfen. Im Folgenden wird davon ausgegangen, dass der Wert eines Steuersignals von Nachrichten des ersten Teilbussystems geprüft werden kann.

So lange keine Daten oder Nachrichtenbits auf dem ersten Teilbussystem 240 übertragen werden, ist die erfinderische Übertragungseinheit 310 beziehungsweise die Vorrichtung 300 transparent. Die beiden angeschlossenen Teilbussysteme sind durch die Vorrichtung 300 elektrisch verbunden. Es werden also durch die Vorrichtung beide Teilbussysteme 240 und 250 zu einem einzigen physikalischen Bus vereint. Eine Spannungsdifferenz, die von dem ersten Teilnehmer 241 an dem ersten Teilbussystem 240 angelegt wird, liegt auch für den zweiten Teilnehmer 251 an dem zweiten Teilbussystem 250 an.

In einer alternativen Ausführungsform werden die Daten beziehungsweise Nachrichtenbits nahezu verzögerungsfrei bitweise weitergegeben, jedoch können die physikalischen Realisierungen der Signale (beispielsweise Spannungsdifferenzen) unterschiedlich sein.

Wird nun eine Nachricht auf dem ersten Teilbussystem 240 übertragen, beispielsweise indem der Teilnehmer 241 wechselnde Spannungsdifferenzen an den Leitungen des Teilbussystems 240 anlegt, so prüft die erfinderische Vorrichtung 300 die Werte der Spannungsdifferenzen, also der Nachrichtenbits.

Die Protokollprüfungseinheit 430 ist dazu eingerichtet, die empfangenen Nachrichtenbits zu prüfen und annähernd verzögerungsfrei auf dem zweiten angeschlossenen Teilbussystem 250 auszugeben. Wenn ein an einer festgelegten Position innerhalb der Nachricht vorgesehenes, vorgegebenes Steuersignal einen vorgegebenen Wert aufweist, wird die gesamte Nachricht auf dem zweiten angeschlossenen Teilbussystem 250 ausgegeben. Bei Vorliegen eines abweichenden Wertes des vorgegebenen Steuersignals wird von der Übertragungseinheit 310 beziehungsweise von der Protokollprüfungseinheit 430 an Stelle der nachfolgend empfangenen Nachrichtenbits ab dem vorgegebenen Steuersignal eine vorgegebene oder vorgebbare oder ermittelte Abschluss-Bitsequenz, also eine vorgegebene oder vorgebbare oder ermittelte Bitfolge, auf dem zweiten Teilbussystem 250 ausgegeben, um die Nachricht für die Teilnehmer 251 des zweiten Teilbussystems zu vervollständigen. Hierbei kann es erforderlich sein, die Abschluss-Bitsequenz abhängig von den zuvor empfangenen Nachrichtenbits zu ermitteln, um die Nachricht für die Teilnehmer 251 des zweiten Teilbussystems in gültiger Weise zu vervollständigen.

Die Nachrichten mit unterschiedlichen Formaten, also im vorliegenden Beispiel die Nachrichten mit herkömmlichem Classic CAN Format und mit CAN FD Format sind an dem in Figur 1 mit FDF bezeichneten Steuerbit unterscheidbar.

Allgemein gesprochen werden durch die Vorrichtung über das erste Bussystem Nachrichten empfangen, wobei die Nachrichten als Abfolge einer ersten Bitsequenz, wenigstens eines Steuersignals und einer zweiten Bitsequenz aufgebaut sind, wobei durch die Vorrichtung die erste Bitsequenz einer empfangenen Nachricht an eine Verarbeitungsstation weitergeleitet wird, wobei durch die Vorrichtung wenigstens ein vorgegebenes Steuersignal überprüft wird. Wenn das vorgegebene Steuersignal der empfangenen Nachricht einen vorgegebenen Wert aufweist, wird durch die Vorrichtung die zweite Bitsequenz der empfangenen Nachricht an die Verarbeitungsstation weitergeleitet.

Wenn das vorgegebene Steuersignal der empfangenen Nachricht einen von dem vorgegebenen Wert abweichenden Wert aufweist, sendet die Vorrichtung an Stelle der zweiten Bitsequenz eine vorgegebene oder vorgebbare oder ermittelte Abschluss-Bitsequenz an die Verarbeitungsstation. Die Abschluss-Bitsequenz kann abhängig von der ersten Bitsequenz ermittelt werden.

Im vorliegenden Beispiel mit Classic CAN bzw. CAN FD Bussystemen ist es vorteilhaft, dass bereits das rezessiv empfangene, CAN FD Nachrichten kennzeichnende FDF-Bit als dominantes Bit in den Classic CAN Teilbus weitergegeben wird. Das vorgegebene Steuerbit wird also unabhängig vom Wert des auf dem ersten Teilbussystem empfangenen Steuerbits immer mit einem festgelegten Wert auf dem zweiten Teilbussystem ausgegeben.

In der Ausführungsform mit Classic CAN bzw. CAN FD Bussystemen vervollständigt die Vorrichtung, falls das vorgegebene Steuerbit der empfangenen Nachricht einen von dem vorgegebenen Wert abweichenden Wert aufweist, die Nachricht durch eine Abschluss-Bitsequenz, welche einen Data Length Code mit dem Wert Null enthält, also DLC = 0x0000. Die Nachricht enthält kein Datenfeld (Figur 1, Data Field). Auf den Data Length Code folgen das CRC Field, das Acknowledge Field und das End-Of-Frame Field. Das CRC Field wird abhängig von den zuvor empfangenen Nachrichtenbits ermittelt. Dadurch ist sichergestellt, dass die auf dem zweiten Teilbussystem gesendete Nachricht eine gültige Classic CAN-Nachricht ist, und dass diese Nachricht nicht länger dauert, als die ursprünglich auf dem ersten Teilbussystem empfangene Nachricht. Auf diese Weise wird vermieden, dass bereits das Versenden einer nachfolgenden Nachricht auf dem ersten Teilbussystem beginnt, während auf dem zweiten Teilbussystem noch die Abschluss-Bitsequenz versendet wird.

Die durch die Abschluss-Bitsequenz vervollständigte Nachricht dient nur der Vermeidung von Protokollverletzungen auf dem zweiten Teilbussystem und kann bei der Akzeptanzfilterung durch die Teilnehmer 251 des zweiten Teilbussystems verworfen werden.

Wenn das Empfangen der Nachricht vom ersten Teilbussystem beendet ist, werden das erste und das zweite Teilbussystem wieder zu einem einzigen physikalischen Bus verbunden.

Abhängig vom jeweils vorliegenden physikalischen Übertragungsstandard sind entsprechende Abschlusswiderstände zuzuschalten oder wegzuschalten, um die Übertragungscharakteristik der Teilbussysteme und des verbundenen Bussystems zu optimieren.

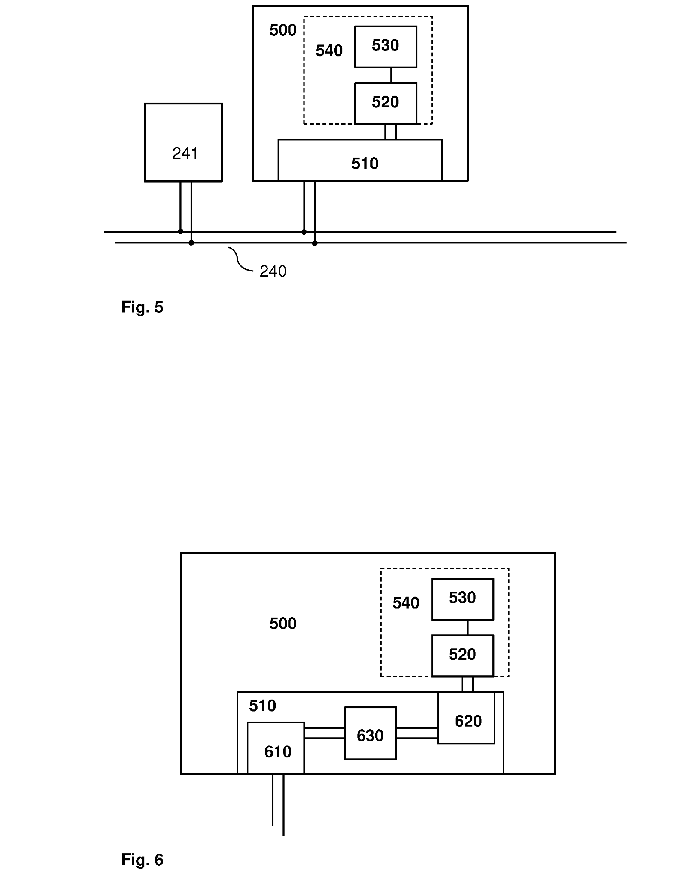

### Ausführungsbeispiel 2 (Figuren 5 und 6):

Figur 5 zeigt schematisch ein Bussystem mit einer erfindungsgemäßen Vorrichtung, welche an das Bussystem angeschlossen ist. Figur 6 zeigt ein schematisches Blockschaltbild einer zweiten Ausführungsform der vorliegenden Erfindung.

Die erfinderische Vorrichtung 500 umfasst eine erfindungsgemäße Übertragungseinheit 510, sowie einen Kommunikationscontroller 520 und einen Mikrocontroller 530. Kommunikationscontroller 520 und Mikrocontroller 530 können auch in ein einziges Halbleiterbauelement 540 integriert sein, was in Figur 5 durch eine gestrichelte Linie angedeutet ist. Die Vorrichtung 500 ist über die erfindungsgemäße Übertragungseinheit 510 an ein Bussystem 240 mit wenigstens einem weiteren Teilnehmer 241 angeschlossen. Das Bussystem weist beispielsweise zwei Leitungen auf, etwa zwei Kupferleitungen, welche gegeneinander isoliert sind.

Die Übertragungseinheit 510 weist, wie in Figur 6 dargestellt, einen Transceiver oder eine Busanschlusseinheit 610 auf. An den Transceiver 610 ist das Bussystem 240 mit wenigstens einem Teilnehmer 241 angeschlossen.

Die Übertragungseinheit 510 weist weiterhin eine Protokollprüfungseinheit 630 auf, welche dazu eingerichtet ist, in den über das angeschlossene Bussystem empfangenen Nachrichten den Wert eines festgelegten Steuersignals zu prüfen. Die Übertragungseinheit 510 weist schließlich eine Weitergabeeinheit 620 auf, die geeignete Signale an den Kommunikationscontroller 520 weitergibt.

Im Sendefall, wenn die Vorrichtung 500 eine Nachricht über das Bussystem 240 versenden möchte, verhält sich die Übertragungseinheit 510 wie ein herkömmlicher Transceiver für das Bussystem 240.

So lange keine Daten oder Nachrichtenbits auf dem ersten Teilbussystem 240 übertragen werden, übernimmt die erfinderische Übertragungseinheit 510 die Funktion eines herkömmlichen Transceivers und beobachtet die Leitungspegel.

Wird nun eine Nachricht auf dem ersten Teilbussystem 240 übertragen, beispielsweise indem der Teilnehmer 241 wechselnde Spannungsdifferenzen an den Leitungen des Teilbussystems 240 anlegt, so empfängt die erfindungsgemäße Übertragungseinheit 510 die Werte der Spannungsdifferenzen, also der Nachrichtenbits.

Die Protokollprüfungseinheit 630 ist dazu eingerichtet, die empfangenen Nachrichtenbits zu prüfen und annähernd verzögerungsfrei über die Weitergabeeinheit 620 an den Kommunikationscontroller 520 weiterzugeben. Wenn ein an einer festgelegten Position innerhalb der Nachricht vorgesehenes, vorgegebenes Steuersignal einen vorgegebenen Wert aufweist, wird die gesamte Nachricht an den Kommunikationscontroller 520 weitergegeben. Bei Vorliegen eines abweichenden Wertes des vorgegebenen Steuersignals wird von der Übertragungseinheit 510 beziehungsweise der Protokollprüfungseinheit 630 an Stelle der nachfolgend empfangenen Nachrichtenbits ab dem vorgegebenen Steuersignal eine vorgegebene oder vorgebbare oder ermittelte Abschluss-Bitsequenz, also eine vorgegebene oder vorgebbare oder ermittelte Bitfolge, an den Kommunikationscontroller 520 weitergegeben, um die Nachricht zu vervollständigen. Hierbei kann es erforderlich sein, die Abschluss-Bitsequenz abhängig von den zuvor empfangenen Nachrichtenbits zu ermitteln, um die Nachricht für den Kommunikationcontroller 520 in gültiger Weise zu vervollständigen.

Die Nachrichten mit unterschiedlichen Formaten, also im vorliegenden Beispiel die Nachrichten mit herkömmlichem Classic CAN Format und mit CAN FD Format sind an dem in Figur 1 mit FDF bezeichneten Steuerbit unterscheidbar.

Allgemein gesprochen werden durch die Vorrichtung über das erste Bussystem Nachrichten empfangen, wobei die Nachrichten als Abfolge einer ersten Bitsequenz, wenigstens eines Steuersignals und einer zweiten Bitsequenz aufgebaut sind, wobei durch die Vorrichtung die erste Bitsequenz einer empfangenen Nachricht an eine Verarbeitungsstation weitergeleitet wird, wobei durch die Vorrichtung wenigstens ein vorgegebenes Steuersignal überprüft wird. Wenn das vorgegebene Steuersignal der empfangenen Nachricht einen vorgegebenen Wert aufweist, wird durch die Vorrichtung die zweite Bitsequenz der empfangenen Nachricht an die Verarbeitungsstation weitergeleitet.

Wenn das vorgegebene Steuersignal der empfangenen Nachricht einen von dem vorgegebenen Wert abweichenden Wert aufweist, sendet die Vorrichtung an Stelle der zweiten Bitsequenz eine vorgegebene oder vorgebbare oder ermittelte Abschluss-Bitsequenz an die Verarbeitungsstation. Die Abschluss-Bitsequenz kann abhängig von der ersten Bitsequenz ermittelt werden.

In der Ausführungsform mit Classic CAN bzw. CAN FD Bussystemen vervollständigt die Vorrichtung, falls das vorgegebene Steuerbit der empfangenen Nachricht einen von dem vorgegebenen Wert abweichenden Wert aufweist, die Nachricht durch eine Abschluss-Bitsequenz, welche einen Data Length Code mit dem Wert Null enthält, also DLC = 0x0000. Die Nachricht enthält kein Datenfeld (Figur 1, Data Field). Auf den Data Length Code folgen das CRC Field, das Acknowledge Field und das End-Of-Frame Field. Das CRC Field wird abhängig von den zuvor empfangenen Nachrichtenbits ermittelt. Dadurch ist sichergestellt, dass die an den Kommunikationcontroller 520 gesendete Nachricht eine gültige Classic CAN-Nachricht ist, und dass diese Nachricht nicht länger dauert, als die ursprünglich auf dem ersten Bussystem empfangene Nachricht. Auf diese Weise wird vermieden, dass bereits das Versenden einer nachfolgenden Nachricht auf dem ersten Bussystem beginnt, während der Kommunikationcontroller 520 noch die Abschluss-Bitsequenz empfängt.

Im vorliegenden Beispiel mit Classic CAN bzw. CAN FD Bussystemen ist es vorteilhaft, dass bereits das rezessiv empfangene, CAN FD Nachrichten kennzeichnende FDF-Bit als dominantes Bit an den Kommunikationscontroller 520 weitergegeben wird. Das Steuerbit wird also unabhängig vom Wert des auf dem Bussystem empfangenen Steuerbits immer mit einem festgelegten Wert an den Kommunikationscontroller 520 weitergegeben.

Wie weiter oben angesprochen, ist in den Ausführungsbeispielen lediglich der Fall detailliert dargestellt, dass die Nachrichten ein einziges Steuerbit aufweisen. Die Erfindung kann leicht auf den Fall übertragen werden, dass das Steuersignal aus mehreren Bits besteht. Beispielsweise könnten zwei Bits verwendet werden, um zwischen vier unterschiedlichen Nachrichtenformaten F1, F2, F3 und F4 zu unterscheiden. Die Bitfolge "00" als Steuersignal signalisiert Format F1, Bitfolge "01" signalisiert Format F2, Bitfolge "10" signalisiert Format F3, Bitfolge "11" signalisiert Format F4. Nur für Nachrichten mit dem Steuersignal "11" wird an Stelle der nach dem Steuersignal empfangenen zweiten Bitsequenz eine vorgegebene oder vorgebbare oder ermittelte Abschluss-Bitsequenz an die Verarbeitungsstation gesendet.

Für den weiteren Fall, dass mehrere Steuerbits oder Steuersignale zur Unterscheidung mehrerer unterschiedlicher Nachrichtenformate verwendet werden, kann die Erfindung ebenfalls angewendet werden, beispielsweise durch eine Kaskadierung. Das heißt, bei jedem Steuersignal oder Steuerbit wird abhängig vom Wert entschieden, ob die empfangenen Nachrichtenbits an die jeweilige Verarbeitungsstation weitergegeben oder stattdessen eine für dieses Steuersignal geeignete Abschluss-Bitsequenz weitergegeben wird. Die Abschluss-Bitsequenz wird dabei abhängig vom jeweiligen Steuersignal so ausgewählt beziehungsweise ermittelt, dass die Verarbeitungsstation eine gültige Nachricht erhält.

## Patentansprüche

1. Übertragungseinheit (310, 510) zum Anschluss an ein erstes Bussystem (240),
wobei die Übertragungseinheit über das erste Bussystem Nachrichten empfängt,
wobei die Nachrichten als Abfolge einer ersten Bitsequenz (110), wenigstens eines Steuersignals (120) und einer zweiten Bitsequenz (130) aufgebaut sind,
wobei durch die Übertragungseinheit die erste Bitsequenz (110) einer empfangenen Nachricht an eine Verarbeitungsstation (251, 520, 540) weitergeleitet wird,
wobei durch die Übertragungseinheit wenigstens ein vorgegebenes Steuersignal (120) der empfangenen Nachricht überprüft wird,
wobei durch die Übertragungseinheit die zweite Bitsequenz (130) der empfangenen Nachricht an die Verarbeitungsstation weitergeleitet wird, wenn das vorgegebene Steuersignal der empfangenen Nachricht einen vorgegebenen Wert aufweist,
**dadurch gekennzeichnet, dass**
die Übertragungseinheit an Stelle der zweiten Bitsequenz eine vorgegebene oder vorgebbare Abschluss-Bitsequenz an die Verarbeitungsstation sendet, wenn das vorgegebene Steuersignal der empfangenen Nachricht einen von dem vorgegebenen Wert abweichenden Wert aufweist.

2. Übertragungseinheit nach Anspruch 1,
**dadurch gekennzeichnet, dass**
die Übertragungseinheit über das erste Bussystem Nachrichten in einem ersten Format und Nachrichten in wenigstens einem weiteren Format empfängt,
wobei der vorgegebene Wert des vorgegebenen Steuersignals die Nachrichten in dem ersten Format kennzeichnet,
wobei die vorgegebene oder vorgebbare Abschluss-Bitsequenz, welche die Übertragungseinheit an Stelle der zweiten Bitsequenz an die Verarbeitungsstation sendet, so aufgebaut ist, dass die Verarbeitungsstation eine intakte Nachricht gemäß dem ersten Format erhält.

3. Übertragungseinheit nach Anspruch 1 oder 2,
**dadurch gekennzeichnet, dass**
die vorgegebene oder vorgebbare Abschluss-Bitsequenz so aufgebaut ist, dass die von der Verarbeitungsstation empfangene Nachricht im ersten Format nicht später endet, als die über das erste Bussystem empfangene Nachricht.

4. Übertragungseinheit nach einem der Ansprüche 1 bis 3,
**dadurch gekennzeichnet, dass**
durch die Übertragungseinheit die erste Bitsequenz der empfangenen Nachricht an die Verarbeitungsstation weitergeleitet wird, indem eine physikalische Kopplung der Leitungen des ersten Bussystems mit den Leitungen eines zweiten Bussystems hergestellt wird,
wobei die Verarbeitungsstation ein Teilnehmer des zweiten Bussystems ist.

5. Übertragungseinheit nach Anspruch 4,
**dadurch gekennzeichnet, dass**
die physikalische Kopplung getrennt wird, wenn das vorgegebene Steuersignal der empfangenen Nachricht einen von dem vorgegebenen Wert abweichenden Wert aufweist.

6. Übertragungseinheit nach einem der Ansprüche 1 bis 3,
**dadurch gekennzeichnet, dass**
durch die Übertragungseinheit die erste Bitsequenz der empfangenen Nachricht an die Verarbeitungsstation weitergeleitet wird, indem bitweise die über das erste Bussystem empfangenen Signale auf die Leitungen eines zweiten Bussystems übertragen werden,
wobei die Verarbeitungsstation ein Teilnehmer des zweiten Bussystems ist.

7. Übertragungseinheit nach Anspruch 6,
**dadurch gekennzeichnet, dass**
die Übertragungseinheit an Stelle der zweiten Bitsequenz die vorgegebene oder vorgebbare Abschluss-Bitsequenz über das zweite Bussystem sendet, wenn das vorgegebene Steuersignal der empfangenen Nachricht einen von dem vorgegebenen Wert abweichenden Wert aufweist.

8. Übertragungseinheit nach Anspruch 2 oder 3,
**dadurch gekennzeichnet, dass**
durch die Übertragungseinheit die erste Bitsequenz der empfangenen Nachricht an die Verarbeitungsstation weitergeleitet wird, indem bitweise die über das erste Bussystem empfangenen Signale über interne Leitungen an einen Kommunikationscontroller oder Mikrocontroller als Verarbeitungsstation übertragen werden,
wobei der Kommunikationscontroller oder Mikrocontroller für die Verarbeitung von Nachrichten im ersten Format eingerichtet ist.

9. Übertragungseinheit nach einem der vorherigen Ansprüche,
**dadurch gekennzeichnet, dass**
das erste Format das CAN Nachrichtenformat ist und dass das weitere Format das CAN FD Nachrichtenformat ist.

10. Übertragungseinheit nach einem der vorherigen Ansprüche,
**dadurch gekennzeichnet, dass**
die Übertragungseinheit den vorgegebenen Wert für das vorgegebene Steuersignal an die Verarbeitungsstation sendet, wenn das vorgegebene Steuersignal der empfangenen Nachricht einen von dem vorgegebenen Wert abweichenden Wert aufweist.

11. Übertragungseinheit nach einem der vorherigen Ansprüche,
**dadurch gekennzeichnet, dass**
die Übertragungseinheit als Halbleiterbauelement oder als integrierte Schaltung ausgebildet ist.

12. Vorrichtung zum Anschluss an ein Bussystem,
**dadurch gekennzeichnet, dass**
die Vorrichtung wenigstens eine Übertragungseinheit gemäß einem der vorherigen Ansprüche umfasst.

13. Verfahren zum Empfang von Nachrichten über ein erstes Bussystem (240), wobei die Nachrichten als Abfolge einer ersten Bitsequenz (110), wenigstens eines Steuersignals (120) und einer zweiten Bitsequenz (130) aufgebaut sind,
mit den Schritten:
- die erste Bitsequenz einer empfangenen Nachricht wird an eine Verarbeitungsstation (251, 520, 540) weitergeleitet,
- wenigstens ein vorgegebenes Steuersignal der empfangenen Nachricht wird überprüft,
**gekennzeichnet durch** die weiteren Schritte:
- wenn das vorgegebene Steuersignal der empfangenen Nachricht einen vorgegebenen Wert aufweist, wird die zweite Bitsequenz der empfangenen Nachricht an die Verarbeitungsstation weitergeleitet,
- wenn das vorgegebene Steuersignal der empfangenen Nachricht einen von dem vorgegebenen Wert abweichenden Wert aufweist, wird an Stelle der zweiten Bitsequenz eine vorgegebene oder vorgebbare Abschluss-Bitsequenz an die Verarbeitungsstation gesendet.

14. Verfahren nach Anspruch 13, wobei über das erste Bussystem Nachrichten in einem ersten Format und Nachrichten in wenigstens einem weiteren Format empfangen werden können,
wobei der vorgegebene Wert des vorgegebenen Steuersignals die Nachrichten in dem ersten Format kennzeichnet,
wobei die vorgegebene oder vorgebbare Abschluss-Bitsequenz, welche die Übertragungseinheit an Stelle der zweiten Bitsequenz an die Verarbeitungsstation sendet, so aufgebaut ist, dass die Verarbeitungsstation eine intakte Nachricht gemäß dem ersten Format erhält.

## Claims

1. Transmission unit (310, 510) for connection to a first bus system (240),
wherein the transmission unit uses the first bus system to receive messages,
wherein the messages are designed as a succession of a first bit sequence (110), at least one control signal (120) and a second bit sequence (130), wherein the transmission unit forwards the first bit sequence (110) of a received message to a processing station (251, 520, 540),
wherein the transmission unit checks at least one prescribed control signal (120) of the received message,
wherein the transmission unit forwards the second bit sequence (130) of the received message to the processing station if the prescribed control signal of the received message has a prescribed value,
**characterized in that**
the transmission unit sends a prescribed or prescribable terminating bit sequence to the processing station instead of the second bit sequence if the prescribed control signal of the received message has a value differing from the prescribed value.

2. Transmission unit according to Claim 1,
**characterized in that**
the transmission unit uses the first bus system to receive messages in a first format and messages in at least one further format,
wherein the prescribed value of the prescribed control signal denotes the messages in the first format,
wherein the prescribed or prescribable terminating bit sequence that the transmission unit sends to the processing station instead of the second bit sequence is designed such that the processing station is provided with an intact message according to the first format.

3. Transmission unit according to Claim 1 or 2,
**characterized in that**
the prescribed or prescribable terminating bit sequence is designed such that the message received by the processing station in the first format ends no later than the message received via the first bus system.

4. Transmission unit according to one of Claims 1 to 3,
**characterized in that**
the transmission unit forwards the first bit sequence of the received message to the processing station by virtue of a physical coupling of the lines of the first bus system to the lines of a second bus system being made,
wherein the processing station is a subscriber of the second bus system.

5. Transmission unit according to Claim 4,
**characterized in that**
the physical coupling is broken if the prescribed control signal of the received message has a value differing from the prescribed value.

6. Transmission unit according to one of Claims 1 to 3,
**characterized in that**
the transmission unit forwards the first bit sequence of the received message to the processing station by virtue of the signals received via the first bus system being transmitted to the lines of a second bus system bit by bit,
wherein the processing station is a subscriber of the second bus system.

7. Transmission unit according to Claim 6,
**characterized in that**
the transmission unit sends the prescribed or prescribable terminating bit sequence via the second bus system instead of the second bit sequence if the prescribed control signal of the received message has a value differing from the prescribed value.

8. Transmission unit according to Claim 2 or 3,
**characterized in that**
the transmission unit forwards the first bit sequence of the received message to the processing station by virtue of the signals received via the first bus system being transmitted to a communication controller or microcontroller as processing station via internal lines bit by bit, wherein the communication controller or microcontroller is set up for the processing of messages in the first format.

9. Transmission unit according to one of the preceding claims,
**characterized in that**
the first format is the CAN message format and **in that** the further format is the CAN FD message format.

10. Transmission unit according to one of the preceding claims,
**characterized in that**
the transmission unit sends the prescribed value for the prescribed control signal to the processing station if the prescribed control signal of the received message has a value differing from the prescribed value.

11. Transmission unit according to one of the preceding claims,
**characterized in that**
the transmission unit is configured as a semiconductor component or as an integrated circuit.

12. Apparatus for connection to a bus system,
**characterized in that**
the apparatus comprises at least one transmission unit according to one of the preceding claims.

13. Method for receiving messages via a first bus system (240), wherein the messages are designed as a succession of a first bit sequence (110), at least one control signal (120) and a second bit sequence (130),
having the steps:
- the first bit sequence of a received message is forwarded to a processing station (251, 520, 540),
- at least one prescribed control signal of the received message is checked,
**characterized by** the further steps:
- if the prescribed control signal of the received message has a prescribed value, the second bit sequence of the received message is forwarded to the processing station,
- if the prescribed control signal of the received message has a value differing from the prescribed value, a prescribed or prescribable terminating bit sequence is sent to the processing station instead of the second bit sequence.

14. Method according to Claim 13, wherein the first bus system can be used to receive messages in a first format and messages in at least one further format, wherein the prescribed value of the prescribed control signal denotes the messages in the first format,
wherein the prescribed or prescribable terminating bit sequence that the transmission unit sends to the processing station instead of the second bit sequence is designed such that the processing station is provided with an intact message according to the first format.

## Revendications

1. Unité de transmission (310, 510) destinée à être raccordée à un premier système de bus (240),
dans laquelle l'unité de transmission reçoit des messages par le biais du premier système de bus,
dans laquelle les messages sont conçus comme une suite d'une première séquence de bits (110), d'au moins un signal de commande (120) et d'une deuxième séquence de bits (130),
dans laquelle la première séquence de bits (110) d'un message reçu est transmise à une station de traitement (251, 520, 540) par l'unité de transmission,
dans laquelle au moins un signal de commande prédéterminé (120) du message reçu est vérifié par l'unité de transmission,
dans laquelle la deuxième séquence de bits (130) du message reçu est transmise à la station de traitement par l'unité de transmission lorsque le signal de commande prédéterminé du message reçu a une valeur prédéterminée, **caractérisée en ce que** l'unité de transmission envoie une séquence de bits de terminaison prédéterminée ou pouvant être prédéterminée à la place de la deuxième séquence de bits lorsque le signal de commande prédéterminé du message reçu a une valeur différente de la valeur prédéterminée.

2. Unité de transmission selon la revendication 1,
**caractérisée en ce que** l'unité de transmission reçoit par le biais du premier système de bus des messages dans un premier format et des messages dans au moins un autre format,
dans laquelle la valeur prédéterminée du signal de commande prédéterminé identifie les messages dans le premier format,
dans laquelle la séquence de bits de terminaison prédéterminée ou pouvant être prédéterminée que l'unité de transmission envoie à la station de traitement à la place de de la deuxième séquence de bits est conçue de manière à ce que la station de traitement reçoive un message intact conforme au premier format.

3. Unité de transmission selon la revendication 1 ou 2,
**caractérisée en ce que** la séquence de bits de terminaison prédéterminée ou pouvant être prédéterminée est conçue de manière à ce que le message reçu par la station de traitement dans le premier format ne se termine pas plus tard que le message reçu par le biais du premier système de bus.

4. Unité de transmission selon l'une des revendications 1 à 3,
**caractérisée en ce que** la première séquence de bits du message reçu est transmise à la station de traitement par l'unité de transmission en établissant un couplage physique des lignes du premier système de bus avec les lignes d'un deuxième système de bus,
dans laquelle la station de traitement est un élément du deuxième système de bus.

5. Unité de transmission selon la revendication 4,
**caractérisée en ce que** le couplage physique est interrompu lorsque le signal de commande prédéterminé du message reçu a une valeur s'écartant de la valeur prédéterminée.

6. Unité de transmission selon l'une des revendications 1 à 3,
**caractérisée en ce que** la première séquence de bits du message reçu est transmise à la station de traitement par l'unité de transmission par transmission par bits des signaux reçus par le biais du premier système de bus sur les lignes d'un deuxième système de bus,
dans laquelle la station de traitement est un élément du deuxième système de bus.

7. Unité de transmission selon la revendication 6,
**caractérisée en ce que** l'unité de transmission transmet la séquence de bits de terminaison prédéterminée ou pouvant être prédéterminée par le biais du deuxième système de bus à la place de la deuxième séquence de bits lorsque le signal de commande prédéterminé du message reçu a une valeur s'écartant de la valeur prédéterminée.

8. Unité de transmission selon la revendication 2 ou 3,
**caractérisée en ce que** la première séquence de bits du message reçu est transmise à la station de traitement par l'unité de transmission par transmission par bits des signaux reçus par le biais du premier système de bus sur des lignes internes à un contrôleur de communication ou à un microcontrôleur en tant que station de traitement, dans laquelle le contrôleur de communication ou le microcontrôleur est conçu pour le traitement de messages dans le premier format.

9. Unité de transmission selon l'une des revendications précédentes,
**caractérisée en ce que** le premier format est le format de message CAN et **en ce que** l'autre format est le format de message CAN FD.

10. Unité de transmission selon l'une des revendications précédentes,
**caractérisée en ce que** l'unité de transmission envoie la valeur prédéterminée du signal de commande prédéterminé à la station de traitement lorsque le signal de commande prédéterminé du message reçu a une valeur s'écartant de la valeur prédéterminée.

11. Unité de transmission selon l'une des revendications précédentes,
**caractérisée en ce que** l'unité de transmission est réalisée sous la forme d'un composant à semi-conducteur ou d'un circuit intégré.

12. Dispositif destiné à être raccordé à un système de bus,
**caractérisé en ce que** le dispositif comprend au moins une unité de transmission selon l'une des revendications précédentes.

13. Procédé de réception de messages par le biais d'un premier système de bus (240),
dans lequel les messages sont conçus comme une suite d'une première séquence de bits (110), d'au moins un signal de commande (120) et d'une deuxième séquence de bits (130),
comprenant les étapes suivantes :
- la première séquence de bits d'un message reçu est transmise à une station de traitement (251, 520, 540) ;
- au moins un signal de commande prédéterminé du message reçu est vérifié,
**caractérisé par** les étapes supplémentaires suivantes :
- lorsque le signal de commande prédéterminé du message reçu a une valeur prédéterminée, la deuxième séquence de bits du message reçu est transmise à la station de traitement, et
- lorsque le signal de commande prédéterminé du message reçu a une valeur s'écartant de la valeur spécifiée, une séquence de bits de terminaison prédéterminée ou pouvant être prédéterminée est envoyée à la station de traitement à la place de de la deuxième séquence de bits.

14. Procédé selon la revendication 13, dans lequel des messages peuvent être reçus dans un premier format et des messages peuvent être reçus dans au moins un autre format par le biais du premier système de bus,
dans lequel la valeur prédéterminée du signal de commande prédéterminé identifie les messages dans le premier format,
dans lequel la séquence de bits de terminaison prédéterminée ou pouvant être prédéterminée que l'unité de transmission envoie à la station de traitement à la place de la deuxième séquence de bits est conçue de manière à ce que la station de traitement reçoive un message intact conforme au premier format.
